# EUROPÄISCHE PATENTANMELDUNG

(11) **EP 4 523 535 A2**
(43) Veröffentlichungstag der Anmeldung: **19.03.2025**
(21) Anmeldenummer: 24197214.0
(22) Anmeldetag: 29.08.2024
(51) Int. Cl.: A21D 15/02, A23B 2/10, A23B 2/80, F25D 31/00

(54) **VERFAHREN ZUM VORBEREITEN AUSZUBACKENDEN BACKGUTS, VAKUUMIERVORRICHTUNG ZUR DURCHFÜHRUNG EINES DERARTIGEN VERFAHRENS, VERFAHREN ZUM ZUBEREITEN VON BACKGUT SOWIE BACKANLAGE ZUR DURCHFÜHRUNG EINES DERARTIGEN ZUBEREITUNGSVERFAHRENS**

(30) Priorität: 12.09.2023 DE 102023208849
(71) Anmelder: Werner & Pfleiderer Lebensmitteltechnik GmbH, 91550 Dinkelsbühl (DE)
(72) Erfinder: Schabert, Michael, 86343 Königsbrunn (DE); Gebhardt, Ralf, 91726 Gerolfingen (DE); Färber, Georg, 91744 Weiltingen (DE); Hetkamp, Hans-Peter, 59846 Sundern (DE)
(74) Vertreter: Rau, Schneck & Hübner Patentanwälte Rechtsanwälte PartGmbB

(57) **Zusammenfassung**

Zum Vorbereiten auszubackenden Backguts wird vorgebackenes Backgut mit einer Vakuumiervorrichtung vakuumiert und abgekühlt. Die Vakuumiervorrichtung hat eine Vakuumkammer, eine Vakuumpumpe und eine Kondensatoreinrichtung mit einem Kondensator. Eine Kühlleistung der Kondensatoreinrichtung wird abhängig von einem zu erreichenden Ausbackergebnis über eine Steuereinrichtung vorgegeben, die mit der Kondensatoreinrichtung in Signalverbindung steht. Zum Zubereiten von Backgut werden nach dem Bereiten eines Teiges und einem Vorbacken von aus dem bereiteten Teig geformter Teiglinge dieses vorgebackene Backgut vakuumiert und abgekühlt, dann zwischengelagert und ausgebacken. Dies erfolgt mittels einer Backanlage. Es resultiert ein Vorbereitungsverfahren, das energieeffizient und günstig für Bäckereipersonal gestaltet ist und zudem hinsichtlich eines zu erreichenden Backergebnisses optimierbar ist.

## Beschreibung

Der Inhalt der deutschen Patentanmeldung DE 10 2023 208 849.5 wird durch Bezugnahme hierin aufgenommen.

Die Erfindung betrifft ein Verfahren zum Vorbereiten auszubackenden Backguts. Ferner betrifft die Erfindung eine Vakuumiervorrichtung zur Durchführung eines derartigen Verfahrens, ein Verfahren zum Zubereiten von Backgut und eine Backanlage zur Durchführung eines derartigen Zubereitungsverfahrens.

Eine Vakuumiervorrichtung für Backgut ist bekannt aus der EP 1 844 658 B1. Die DE 101 28 394 A1 offenbart ein Verfahren und eine Vorrichtung zum Kühlen feuchter Lebensmittel mittels Vakuum.

Es ist eine Aufgabe der vorliegenden Erfindung, ein Verfahren zum Vorbereiten auszubackenden Backguts einerseits energieeffizient und andererseits günstig für Bäckereipersonal zu gestalten. Zudem soll das Vorbereitungsverfahren hinsichtlich eines zu erreichenden Backergebnisses optimierbar sein.

Diese Aufgabe ist erfindungsgemäß gelöst durch ein Vorbereitungsverfahren mit den im Anspruch 1 angegebenen Merkmalen.

Erfindungsgemäß wurde erkannt, dass ein Ausbackergebnis des mittels des Vorbereitungsverfahrens behandelten Backguts abhängig ist von einer Kühlleistung einer Kondensatoreinrichtung der zum Vakuumieren und Abkühlen verwendeten Vakuumiervorrichtung. Insbesondere wurde erkannt, dass ein Röschegrad beziehungsweise eine Krustenhärte des nachfolgend ausgebackenen Backguts von dieser Kühlleistung abhängt. Entsprechend kann dieses Ausbackergebnis über die Vorgabe der Kühlleistung der Kondensatoreinrichtung beeinflusst werden. Wie das Ausbackergebnis von der Kühlleistung sowie gegebenenfalls von weiteren Betriebsparametern abhängt, kann im Rahmen einer Vorab-Kalibrierung des Vorbereitungsverfahrens bestimmt werden. Abhängig vom eingesetzten Vorbereitungsverfahren hat sich beispielhaft herausgestellt, dass ein Röschegrad, beziehungsweise eine Krustenhärte derart von der Kühlleistung abhängt, dass sich bei größerer Kühlleistung eine härtere Kruste und bei weniger großer Kühlleistung eine weichere Kruste als Ausbackergebnis ergibt. Die Kühlleistung kann insbesondere über eine Temperatur der Kondensatoreinrichtung und/oder über eine Pumpleistung der Vakuumpumpe beeinflusst werden. Auch eine Kühlmittel-Durchflussmenge durch den Kondensator der Kondensatoreinrichtung kann alternativ oder zusätzlich zur Beeinflussung der Kühlleistung herangezogen werden. Entsprechendes gilt für die Größe einer Kondensationsfläche des Kondensators.

Das Vorbereitungsverfahren ermöglicht eine energieeffiziente Zubereitung des Backguts, die ohne Dauerkühlung über Nacht auskommen kann. Zudem ist es möglich, das Vorbereitungsverfahren einerseits und das Ausbacken des Backguts andererseits ohne Frischeeinbuße an aufeinanderfolgenden Tagen durchzuführen, was eine Zubereitung günstiger für Bäckereipersonal macht.

Teil des Vorbereitungsverfahrens kann ein Erfassen einer Temperatur der Kondensatoreinrichtung sein. Diese Erfassung kann mittels eines Temperatursensors der Vakuumiervorrichtung erfolgen. Der Temperaturerfassungsschritt kann Teil einer Regelung der Kühlleistung der Kondensatoreinrichtung sein. Eine Soll-Temperatur der Kondensatoreinrichtung kann dann zur Vorgabe der Kühlleistung eingestellt werden, auf die dann eine mittels des Temperatursensors gemessene Ist-Temperatur der Kondensatoreinrichtung geregelt wird.

Über eine Temperatur-Vorgebbarkeit nach Anspruch 2 kann eine Kühltemperatur eines Abkühlvorgangs des Backguts während des Vorbereitungsverfahrens vorgegeben werden. Der Kondensator kann mit Kühlwasser über eine vorgelagerte Kälteeinrichtung gespeist werden. Alternativ oder zusätzlich kann zur Beeinflussung der Kühlleistung der Kondensatoreinrichtung eine Kühlmittel-Durchflussmenge, insbesondere eine Kühlwasser-Durchflussmenge, vorgegeben werden.

Eine variable Vorgabe einer Kondensationsfläche nach Anspruch 3 ist eine weitere Möglichkeit zur gesteuerten Vorgabe einer Kühlleistung der Kondensatoreinrichtung, die alternativ oder zusätzlich zur Vorgabe einer Kühlmitteltemperatur genutzt werden kann.

Wiederum alternativ oder zusätzlich kann eine Pumpleistung nach Anspruch 4, zur Steuerung der Kühlleistung der Kondensatoreinrichtung vorgegeben werden.

Die Vorteile einer Vakuumiervorrichtung nach Anspruch 5 entsprechen denen, die vorstehend unter Bezugnahme auf das Vorbereitungsverfahren bereits erläutert wurden.

Mittels eines Temperatursensors nach Anspruch 6 ist eine geregelte Ausführung des Vorbereitungsverfahrens möglich, bei der eine Soll-Temperatur der Kondensatoreinrichtung zur Vorgabe der Kühlleistung eingestellt wird, auf die dann eine mittels des Temperatursensors gemessene Ist-Temperatur der Kondensatoreinrichtung geregelt wird. Der mindestens eine Kondensator der Kondensatoreinrichtung kann über eine vorgelagerte Kälteeinrichtung mit Kühlmittel, insbesondere mit Kühlwasser, gespeist werden. Eine Temperatur des Kühlmittels beziehungsweise des Kühlwassers kann geregelt beispielsweise im Bereich zwischen 2 °C und 20 °C vorgegeben werden.

Mittels eines Drucksensors nach Anspruch 7 ist eine Druckregelung beim Vorbereitungsverfahren möglich. Es kann beispielsweise ein Soll-Druckprofil vorgegeben werden, welches während eines Verfahrensablaufs innerhalb der Vakuumkammer der Vakuumiervorrichtung vorliegen soll, wobei dann ein mittels des Drucksensors gemessener Ist-Druck in der Vakuumkammer auf dieses vorgegebene zeitliche Soll-Druckprofil geregelt wird.

Eine weitere Aufgabe der Erfindung ist es, ein Zubereitungsverfahren für Backgut vorzugeben, welches energieeffizient und gleichzeitig günstig für Bedienpersonal ist.

Diese Aufgabe ist erfindungsgemäß gelöst durch ein Zubereitungsverfahren mit den im Anspruch 8 angegebenen Merkmalen.

Beim erfindungsgemäßen Zubereitungsverfahren kann eine Teigzubereitung und ein Ausbacken an unterschiedlichen Tagen stattfinden. Nachtarbeit kann dann weitgehend vermieden werden, was günstig für das Bäckereipersonal ist. Ein energieintensives Kühllagern über Nacht ist nicht erforderlich. Aufgrund des Vorbackens resultiert eine vorteilhaft kurze Backzeit. Das Vorbacken kann ohne zeitlichen Druck erfolgen, was zur Verbesserung der Auslastung einer Produktion genutzt werden kann. Das Vorbacken erfolgt so lange, bis eine Eiweißgerinnung und eine Stärkeverkleisterung des Teigs des Backguts erfolgt ist, sodass das vorgebackene Backgut dann stabilisiert und lagerfähig ist. Das Backgut kann dabei eine Kerntemperatur von mindestens 91 °C erreichen.

Die Vorteile eines Zubereitungsverfahrens nach Anspruch 9 entsprechen zumindest denen, die vorstehend unter Bezugnahme auf das Vorbereitungsverfahren bereits erläutert wurden.

Die Vorteile einer Backanlage nach Anspruch 10 entsprechen denen, die vorstehend unter Bezugnahme auf das Zubereitungsverfahren bereits erläutert wurden. Beim Vorbackofen und beim Ausbackofen kann es sich um ein und denselben Backofen handeln. Beim Vorbackofen einerseits und beim Ausbackofen andererseits kann es sich auch um verschiedene Backöfen handeln, die insbesondere an räumlich voneinander entfernten Standorten aufgestellt sein können, beispielsweise einerseits in einer Backzentrale und andererseits in einer Backfiliale.

Die Vorteile einer Backanlage nach Anspruch 11 entsprechen denen, die vorstehend unter Bezugnahme auf die Vakuumiervorrichtung bereits erläutert wurden.

Ausführungsbeispiele der Erfindung werden nachfolgend anhand der Zeichnung näher erläutert. In dieser zeigt:
- Fig. 1: schematisch Hauptkomponenten einer Vakuumiervorrichtung zur Durchführung eines Verfahrens zum Vorbereiten auszubackenden Backguts;
- Fig. 2: ein Ablaufschema eines Verfahrens zum Zubereiten von Backgut unter Nutzung eines Vakuumierens und Abkühlens vorgebackenen Backguts in der Vakuumiervorrichtung;
- Fig. 3: in einem Diagramm eine zeitliche Entwicklung einerseits eines Absolutdrucks in einer Vakuumkammer der Vakuumiervorrichtung und andererseits einer Kühlwassertemperatur einer Kondensatoreinrichtung der Vakuumiervorrichtung, dargestellt für zwei verschiedene Verfahrensabläufe des Vakuumierens und Abkühlens vorgebackenen Backguts mit unterschiedlichen Randbedingungen "weich" und "hart" für eine Kruste des in der Folge ausgebackenen Backguts.

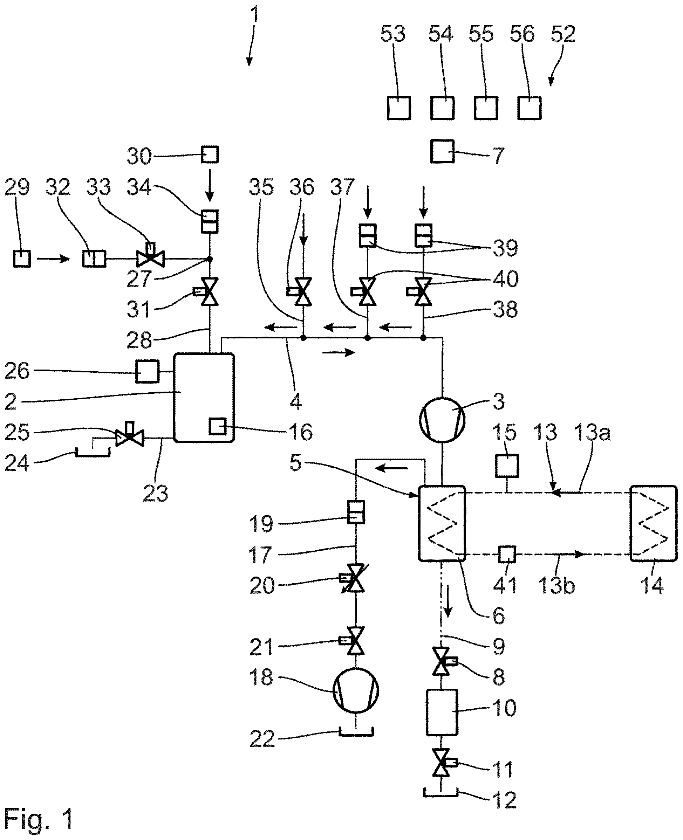

Fig. 1 zeigt eine Vakuumiervorrichtung 1, mit der ein Vakuumieren und Abkühlen vorgebackenen Backguts im Rahmen eines Verfahrens zum Vorbereiten auszubackenden Backguts erfolgt, das wiederum Teil eines Verfahrens zum Zubereiten von Backgut ist.

Die Vakuumiervorrichtung 1 hat eine Vakuumkammer 2 zur Aufnahme zu vakuumierenden und abzukühlenden vorgebackenen Backguts. Die Vakuumkammer 2 steht mit einer Vakuumpumpe 3 über eine Saugleitung 4 in Fluidverbindung. Bei der Vakuumpumpe 3 handelt es sich um eine Vakuumwälzkolbenpumpe. Die Vakuumiervorrichtung 1 hat weiterhin eine Kondensatoreinrichtung 5 mit einem Kondensator 6. Mit der Kondensationseinrichtung 5 und weiteren Komponenten der Vakuumiervorrichtung 1 steht eine Steuereinrichtung 7 der Vakuumiervorrichtung 1 in Signalverbindung.

Über ein Absperrventil 8 und eine Kondensatableitung 9 steht der Kondensator 6 mit einem Kondensatbehälter 10 in Fluidverbindung. Letzterer steht über ein Kondensatablassventil 11 mit einem Kondensat-Sammelbehälter 12 in Fluidverbindung.

Über eine Kühlmittelleitung 13 mit einem Zulaufabschnitt 13a und einem Ablaufabschnitt 13b steht der Kondensator 6 mit einer Kühlmittelquelle 14 in Fluidverbindung. Bei dem Kühlmittel kann es sich um Wasser handeln. Im Kühlmittel-Zulauf 13a ist ein Temperatursensor 15 angeordnet. Ein weiterer Temperatursensor 16 kann direkt in der Vakuumkammer 2 angeordnet sein.

Über eine Vorpump-Saugleitung 17 steht der Kondensator 6 mit einer Vorpumpe 18 in Fluidverbindung. Die Vorpumpe 18 ist als Vakuumdrehschieberpumpe ausgeführt. In der Vorpump-Saugleitung 17 ist dem Kondensator 6 ein Filter 19, ein Vorpumpen-Regelventil 20 und ein Sicherheitsventil 21 nachgeordnet. Der Vorpumpe 18 ist wiederum ein weiterer Kondensat-Sammelbehälter 22 nachgeordnet.

Die Vakuumkammer 2 steht über eine Ablaufleitung 23 mit einem weiteren Kondensat-Sammelbehälter 24 in Fluidverbindung. In der Ablaufleitung 23 ist ein Kondensatablaufventil 25 angeordnet.

Anstelle mehrerer Sammelbehälter 12, 22, 24 kann auch beispielsweise genau ein Kondensat-Sammelbehälter bei der Vakuumiervorrichtung 1 vorgesehen sein.

Die Vakuumiervorrichtung 1 hat weiterhin einen Drucksensor 26 zur Erfassung eines Drucks in der Vakuumkammer 2.

Über eine sich in einem Verzweigungspunkt 27 verzweigende Zuführleitung 28 steht die Vakuumkammer 2 mit einer Trinkwasserquelle 29 einerseits und mit einer Belüftung 30 andererseits in Fluidverbindung. Zwischen der Vakuumkammer 2 und dem Verzweigungspunkt 27 ist ein Luft-Rehydrationsventil 31 angeordnet. Zwischen der Trinkwasserquelle 29 und dem Verzweigungspunkt 27 sind ein Wasserfilter 32 und ein Wasser-Rehydrationsventil 33 angeordnet. Zwischen der Belüftung 30 und dem Verzweigungspunkt 27 ist ein Luftfilter 34 angeordnet.

Zwischen der Vakuumkammer 2 und der Vakuumpumpe 3 münden in die Saugleitung 4 eine Schnellbelüftungsleitung 35, in der ein Schnellbelüftungsventil 36 angeordnet ist, sowie weitere Belüftungsleitungen 37 und 38, in der jeweils Luftfilter 39 und Belüftungsventile 40 angeordnet sind, ein.

Zum Vorbereiten auszubackenden Backguts mittels der Vakuumiervorrichtung 1 wird vorgebackenes Backgut in der Vakuumkammer 2 vakuumiert und abgekühlt. Eine Kühlleistung der Kondensatoreinrichtung 5 wird hierbei abhängig von einem zu erreichenden Ausbackergebnis über die Steuereinrichtung 7 vorgegeben. Bei dem zu erreichenden Ausbackergebnis handelt es sich insbesondere um einen Röschegrad des auszubackenden Backguts, der über eine Krustenhärte spezifiziert werden kann.

Eine Kühlmittel-Zulauftemperatur des Kondensators 6 kann während des Vakuumierens und Abkühlens in einem Bereich zwischen 2 °C und 20 °C vorgegeben werden. Zur Temperaturvorgabe, die als Temperaturregelung gestaltet sein kann, steht der Temperatursensor 15 mit der Steuereinrichtung 7, die als Steuer/Regeleinrichtung ausgeführt sein kann, in Signalverbindung. Zur Steuerung/Regelung des Vakuumierens und Abkühlens kann eine Kühltemperatur des Abkühlvorgangs des Backguts während des Verfahrens vorgegeben werden. Auch eine Kühlmittel-Durchflussmenge eines Kühlmitteldurchflusses über die Kühlmittelleitung 13 durch den Kondensator 6 kann vorgegeben werden. Hierzu kann in der Kühlmittelleitung 13 ein Durchfluss-Sensor 41 angeordnet sein, wie in der Fig. 1 im Kühlmittel-Ablauf 13b angedeutet. Alternativ oder zusätzlich kann ein entsprechender Durchfluss-Sensor auch im Kühlmittel-Zulauf 13a angeordnet sein.

Eine beim Vakuumieren und Abkühlen wirkende Kondensationsfläche des Kondensators 6 kann über die Steuereinrichtung 7 variabel vorgegeben werden. Eine derartige, wirksame Kondensationsfläche des Kondensators 6 kann zwischen einer minimalen Kondensationsfläche und einer maximalen Kondensationsfläche variabel vorgegeben werden. Ein Flächenverhältnis zwischen der maximalen Kondensationsfläche und der minimalen Kondensationsfläche kann im Bereich zwischen 10 und 1,1 liegen.

Eine Pumpleistung der Vakuumpumpe 3 und/oder der Vorpumpe 18 kann variabel über die Steuereinrichtung 7 vorgegeben werden.

Das Vakuumieren und Abkühlen des vorgebackenen Backguts kann Bestandteil eines Verfahrens zum Zubereiten von ausgebackenen Backgut sein.

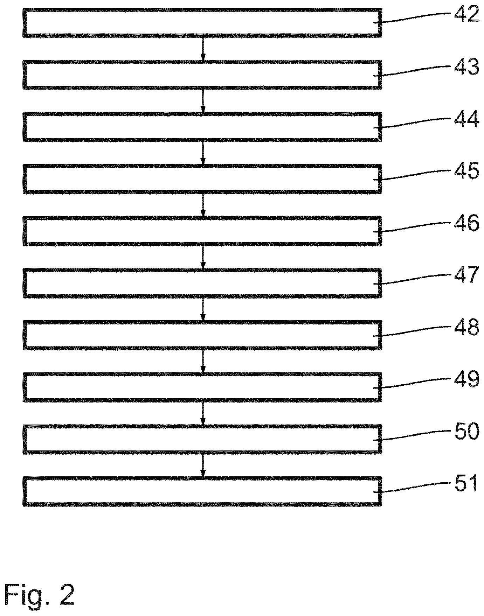

Fig. 2 zeigt ein Ablaufschema eines entsprechenden Zubereitungsverfahrens.

In einem Bereitungsschritt 42 wird ein Teig zubereitet und insbesondere aus vorgegebenen Inhaltsstoffen gemischt. An den Bereitungsschritt 42 schließt sich ein Knetschritt 43 an, in dem der bereitete Teig geknetet wird. Es folgt ein Ruheschritt 44, in dem der geknetete Teig ruht. An den Ruheschritt 44 kann sich ein Ausarbeitungsschritt 45 und ein Gärschritt 46 anschließen.

In einem nachfolgendem Vorbackschritt 47 werden Teiglinge zu Backgut vorgebacken, die aus dem zubereiteten Zeig geformt sind. Beim Vorbacken 47 findet eine Eiweißgerinnung sowie eine Stärkeverkleisterung und somit eine Stabilisierung desvorgebackenen Backguts statt.

Nach dem Vorbacken 47 erfolgt ein Vakuumier- und Abkühlschritt 48 mit der Vakuumiervorrichtung 1, wie vorstehend bereits erläutert. An diesen Vakuumier- und Abkühlschritt 48 schließt sich ein Zwischenlagerschritt 49 an. Das Zwischenlagern 49 erfolgt unter Umgebungsdruck und unter Umgebungstemperatur, kann also außerhalb der Vakuumkammer an einem entsprechenden Lagerplatz einer Backstube erfolgen. Im Anschluss hieran erfolgt in einem Ausbackschritt 50 ein Ausbacken des zwischengelagerten-Backguts. An das Ausbacken 50 schließt sich ein Versenden 51 der fertig ausgebackenen Backguts an.

Die Vakuumiervorrichtung 1 kann zur Durchführung des Zubereitungsverfahrens Bestandteil einer Backanlage 52 sein, deren weitere Hauptkomponenten in der Fig. 1 schematisch dargestellt sind. Bei diesen weiteren Hauptkomponenten handelt es sich um eine Teig-Zubereitungsvorrichtung 53, einen Vorbackofen 54 zum Vorbacken von Teiglingen, die aus dem zubereiteten Teig geformt sind, zu Backgut, um eine Lagereinrichtung 55 zum Zwischenlagern des vakuumierten und abgekühlten Backguts und um einen Ausbackofen 56 zum Ausbacken des gelagerten Backguts. Der Vorbackofen 54 einerseits und der Ausbackofen 56 andererseits könnten ein und derselbe Backofen sein. Beim Vorbackofen 54 einerseits und beim Ausbackofen 56 andererseits kann es sich auch um verschiedene Backöfen, insbesondere um Backöfen handeln, die an räumlich voneinander entfernten Standorten aufgestellt sind.

Das Zubereitungsverfahren nach Fig. 2 kann während mehr als einem Tag stattfinden. Die Schritte 42 bis 45 können am Morgen bzw. Vormittag eines ersten Tages stattfinden. Der Gärschritt 46, das Vorbacken 47 sowie der Vakuumier- und Abkühlschritt 48 können am Mittag dieses ersten Tages stattfinden. Bis zum frühen Morgen des Folgetages kann dann der Lagerschritt 49 erfolgen und anschließend kann am frühen Morgen des Folgetages der Backschritt 50 und der Versandschritt 51 erfolgen.

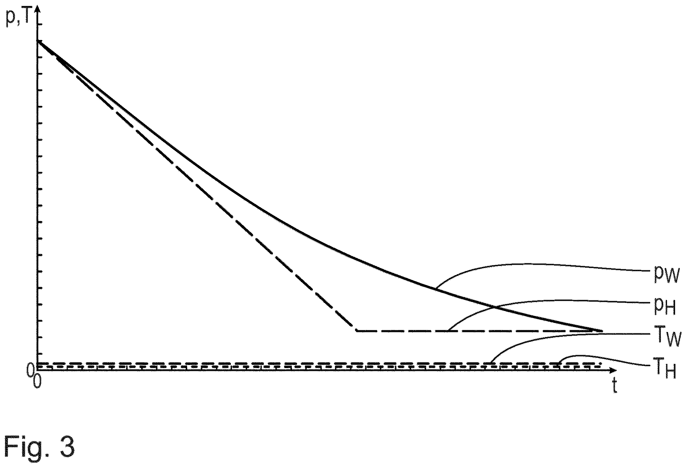

Fig. 3 zeigt in einem Diagramm eine zeitliche Entwicklung während des Vakuumier- und Abkühlschritts 48 einerseits eines Absolutdrucks p in mbar, gemessen über den Drucksensor 26, in der Vakuumkammer 2 und andererseits einer Kühlwassertemperatur T im Kühlmittelleitungs-Zulauf 13a, gemessen über den Temperatursensor 15. Dargestellt sind der Absolutdruck p und die Temperatur T über eine Prozesszeit t im Bereich zwischen einem Prozessstart (t=0 s) und den folgenden etwa 200 s. Der Absolutdruck p und die Temperatur T sind für zwei Betriebsarten "weiche Kruste, W" und "harte Kruste, H" wiedergegeben.

Eine Druckkurve pw für die Betriebsart "weiche Kruste" startet bei Umgebungsdruck bei t=0 und fällt dann exponentiell bis zu einem Absolutdruck pw von etwa 120 mbar bei t≈200 s ab. Bei t≈100 s beträgt der Absolutdruck pw etwa 400 mbar.

Eine Kühlmitteltemperatur Tw beträgt während dieser Betriebsart "weiche Kruste" konstant 20 °C.

Bei dieser Prozessführung "weiche Kruste" resultiert eine Rösche des nach dem Ausbacken 50 ausgebackenen Backguts mit weicher Kruste.

Bei der Betriebsart "harte Kruste" des Vakuumier- und Abkühlschritts 48 nach Fig. 3 fällt der Absolutdruck p_{H}, wiederum ausgehend vom Normaldruck rascher ab als bei der Betriebsart "weiche Kruste". Der Absolutdruck p_{H} fällt innerhalb der ersten etwa 110 s linear vom Umgebungsdruck auf einen vorgegebenen Minimaldruck von 120 mbar ab und bleibt dann während dem Rest der dargestellten Prozessdauer konstant bei 120 mbar.

Eine Kühlmittel-Temperatur T_{H} beträgt bei der Betriebsart "harte Kruste" während des gesamten Prozessablaufs 10 °C.

Bei dieser Betriebsart "harte Kruste" resultiert ausgebackenes Backgut mit einer Rösche, die zu einer härteren Kruste führt als bei der Betriebsart "weiche Kruste".

Die jeweilige Betriebsart wird über die Steuereinrichtung 7 durch entsprechende Ansteuerung einerseits der Vakuumpumpe 3 und andererseits einer Temperaturvorgabe-Einrichtung für das Kühlwasser im Zulauf 13a, vorgegeben. Die Steuereinrichtung 7 gibt also eine Kühlleistung der Kondensatoreinrichtung 6 abhängig vom zum erreichenden Backergebnis vor. Zur Beeinflussung dieser Kühlleistung kann die Steuereinrichtung 7 zudem eine Durchflussmenge des Kühlmittels durch die Kühlmittelleitung 13 steuern und/oder eine wirksame Kondensationsfläche des Kondensators 6, beispielsweise über eine entsprechende Ventilsteuerung von Zulauf-Leitungsabschnitten des Zulaufs 13a, vorgeben.

## Patentansprüche

1. Verfahren zum Vorbereiten auszubackenden Backguts mit folgenden Schritten:
- Vakuumieren und Abkühlen (48) vorgebackenen Backguts mit einer Vakuumiervorrichtung (1), aufweisend eine Vakuumkammer (2), eine Vakuumpumpe (3) und eine Kondensatoreinrichtung (5) mit einem Kondensator (6),
- wobei eine Kühlleistung der Kondensatoreinrichtung (5) abhängig von einem zu erreichenden Ausbackergebnis über eine Steuereinrichtung (7) vorgegeben wird, die mit der Kondensatoreinrichtung (5) in Signalverbindung steht.

2. Verfahren nach Anspruch 1, **dadurch gekennzeichnet, dass** der Kondensator (6) als wassergekühlter Kondensator ausgeführt ist, wobei eine Kühlwasser-Zulauftemperatur des Kondensators (6) im Bereich zwischen 2 °C und 20 °C vorgebbar ist.

3. Verfahren nach Anspruch 1 oder 2, **dadurch gekennzeichnet, dass** eine Kondensationsfläche des Kondensators (6) der Kondensatoreinrichtung (5) variabel vorgebbar ist.

4. Verfahren nach einem der Ansprüche 1 bis 3, **dadurch gekennzeichnet, dass** eine Pumpleistung der Vakuumpumpe (3) variabel vorgebbar ist.

5. Vakuumiervorrichtung (1) zur Durchführung eines Verfahrens nach einem der Ansprüche 1 bis 4,
- mit einer Vakuumkammer (2),
- mit einer Vakuumpumpe (3),
- mit einer Kondensatoreinrichtung (5)
- mit einem Kondensator (6),
- mit einer Steuereinrichtung (7), die mit der Kondensatoreinrichtung (5) in Signalverbindung steht.

6. Vakuumiervorrichtung nach Anspruch 5, **gekennzeichnet durch** einen Temperatursensor (15) zur Erfassung einer Temperatur der Kondensatoreinrichtung (5).

7. Vakuumiervorrichtung nach Anspruch 5 oder 6, **gekennzeichnet durch** einen Drucksensor (26) zur Erfassung eines Drucks in der Vakuumkammer (2).

8. Verfahren zum Zubereiten von Backgut mit folgenden Schritten:
- Bereiten (42) eines Teiges,
- Vorbacken (47) von Teiglingen, die aus dem bereiteten Teig geformt sind, zu vorgebackenem Backgut,
- Vakuumieren und Abkühlen (48) des vorgebackenen Backguts mit einer Vakuumiervorrichtung (1), aufweisend eine Vakuumkammer (2), eine Vakuumpumpe (3) und eine Kondensatoreinrichtung (5),
- Zwischenlagern (49) des vakuumierten und abgekühlten Backguts unter Umgebungsdruck und Umgebungstemperatur,
- Ausbacken (50) des zwischengelagerten Backguts.

9. Verfahren nach Anspruch 8, **dadurch gekennzeichnet, dass** das Vakuumieren und Abkühlen (48) als Teil eines Vorbereitungsverfahrens nach einem der Ansprüche 1 bis 4 erfolgt.

10. Backanlage (52) zur Durchführung eines Zubereitungsverfahrens nach Anspruch 8 oder 9,
- mit einer Teig-Zubereitungsvorrichtung (53),
- mit einem Vorbackofen (54) zum Vorbacken von Teiglingen, geformt aus dem zubereiteten Teig, zu vorgebackenem Backgut,
- mit einer Vakuumiervorrichtung (1) zum Vakuumieren und Abkühlen des vorgebackenen Backguts,
- mit einer Lagereinrichtung (55) zum Zwischenlagern des vakuumierten und abgekühlten Backguts,
- mit einem Ausbackofen (56) zum Ausbacken des gelagerten Backguts.

11. Backanlage nach Anspruch 10, **gekennzeichnet durch** eine Vakuumiervorrichtung nach einem der Ansprüche 5 bis 7.
